# EUROPEAN PATENT SPECIFICATION

(11) **EP 3 112 727 B1**
(45) Date of publication and mention of the grant of the patent: **11.07.2018**
(21) Application number: 14883854.3
(22) Date of filing: 14.08.2014
(51) Int. Cl.: F16J 9/14

(54) **PISTON RING**
KOLBENRING
SEGMENT DE PISTON

(30) Priority: 26.02.2014 JP 2014035070
(43) Date of publication of application: 04.01.2017
(73) Proprietor: Mitsubishi Heavy Industries, Ltd., Tokyo 108-8215 (JP); Japan Engine Corporation, Futami-cho Akashi-shi Hyogo 674-0093 (JP)
(72) Inventor: NISHIDA, Hideaki, Tokyo 108-8215 (JP); ISHIGURO, Tatsuo, Tokyo 108-8215 (JP); SATOU, Nobuaki, Tokyo 108-8215 (JP); OTOWA, Takashi, Tokyo 108-8215 (JP)
(74) Representative: Henkel, Breuer & Partner
(86) International application number: PCT/JP2014/071442
(87) International publication number: WO 2015/129075

(56) References cited:
- WO-A1-95/23304
- JP-U- H01 162 063
- US-A- 5 779 243

## Description

### TECHNICAL FIELD

The present invention relates to a piston ring.

### BACKGROUND ART

A piston ring is mounted to a piston-ring groove formed on an outer peripheral part of a piston. A piston ring has elasticity, and is in slide contact with an inner peripheral surface of a cylinder with a suitable surface pressure, thereby functioning to maintain a pressure in a combustion chamber formed by the piston, the inner peripheral surface of the cylinder, and a cylinder head.

While a piston ring has a ring shape, a discontinuous section called an end gap section is disposed on a part of the piston ring in the circumferential direction. For instance, JP H7-332496A or US-A-5779243 disclose a piston ring with an end gap section of gas-tight type, including a recess portion and a projecting portion disposed on the opposite ends of the piston ring in the circumferential direction, engaged so as to overlap with each other.

JP 2006-337164A discloses a piston ring with an outer peripheral surface formed into a barrel shape bulging outward in a radial direction of the piston ring, so as to improve sealing performance and to reduce slide friction. A barrel center disposed outermost in the radial direction on the outer peripheral surface of the piston ring is in line contact with the inner peripheral surface of the cylinder.

### SUMMARY

### Problems to be Solved

During operation of an engine, a piston ring is heated by combustion gas and thus has a high temperature. At this time, the outer peripheral side of the piston ring is in slide contact with an inner peripheral surface of the cylinder having a relatively low temperature, and thus the temperature on the inner peripheral side of the piston ring is higher than that on the outer peripheral side. Accordingly, a thermal expansion amount of the piston ring is greater at the inner peripheral side than at the outer peripheral side, and thereby an end gap section of the piston ring thermally deforms so as to bulge outward in the radial direction of the piston ring.

Such thermal deformation brings about an increase in a contact surface pressure between the inner peripheral surface of the cylinder and a recess portion (the first tongue section) and a projecting portion (the second tongue section) forming the end gap section, and thereby the inner peripheral surface of the cylinder gets worn unevenly in the vicinity of the end gap section.

Further, the distal end sides of the first tongue section and the second tongue section try to bulge outward in the radial direction due to thermal deformation, and thereby the curvature radii of the first tongue section and the second tongue section exceed the curvature radius of the inner peripheral surface of the cylinder, which is likely to cause the root sides of the first tongue section and the second tongue section to move away from the inner peripheral surface of the cylinder.

Meanwhile, a typical piston ring of gas-tight type has the same barrel shape over the entire circumference of the outer peripheral surface. With this configuration, the barrel center may be disposed unevenly on either one of the first tongue section or on the second tongue section in the axial direction of the piston ring, and not on the other one. In this case, there would be no barrel center in the region where the first tongue section does not overlap with the second tongue section in the axial direction of the piston ring (non-overlapping region).

If uneven wear occurs on the inner peripheral surface of the cylinder due to thermal deformation as described above, there may be a slight gap created between the root sides of the first tongue section and the second tongue section, which are thermally deformed, and the inner peripheral surface of the cylinder. Especially, if there is no barrel center in the non-overlapping region, a gap is even more likely to be created. In this case, high-temperature combustion gas flows through the slight gap created as described above, from the combustion chamber side toward the crank chamber side at a high pressure and a high speed, in the vicinity of roots of the first tongue section and the second tongue section, i.e., in the non-overlapping region. Such flow of combustion gas may lead to a disadvantage in that the outer peripheral surface of the piston ring gets damaged in the non-overlapping region.

The present invention was made to solve the above problem, and an object is to provide a piston ring of gas-tight type with improved durability and suppressed flow-through of combustion gas in the non-overlapping region of the first tongue section and the second tongue section.

### Solution to the Problems

To achieve the above object, a piston ring according to the present invention comprises the features of claim 1.

With the above described configuration, the outer peripheral surface of the first tongue section and the outer peripheral surface of the second tongue section are each formed into a barrel shape, and thus a barrel center is disposed on each of the outer peripheral surface of the first tongue section and the outer peripheral surface of the second tongue section. Thus, a barrel center is always disposed even in a non-overlapping region where the first tongue section and the second tongue section do not overlap with each other in the axial direction of the body section. Accordingly, sealing performance is ensured by the barrel centers of the first tongue-section and the second tongue-section in the non-overlapping region, and flow-through of combustion gas from the side of a combustion chamber toward the side of a crank chamber is reduced in the non-overlapping region. As a result, durability of the piston ring improves, and durability of the engine including the piston ring improves as well.

In some embodiments, the body section has an outer peripheral surface formed into a barrel shape which bulges outward in the radial direction, and the first-tongue-section barrel center disposed outermost in the radial direction on the outer peripheral surface of the first tongue section, a body-section barrel center disposed outermost in the radial direction on the outer peripheral surface of the body section, and the second-tongue-section barrel center disposed outermost in the radial direction on the outer peripheral surface of the second tongue section extend continuously.

With this configuration, the first tongue-section barrel center, the body-section barrel center, and the second tongue-section barrel center extend continuously, and thus the first tongue-section barrel center and the body-section barrel center are seamless, and the second tongue-section barrel center and the body-section barrel center are seamless, thereby ensuring good sealing performance.

In some embodiments, the first-tongue-section barrel center, the body-section barrel center, and the second-tongue-section barrel center extend in a spiral shape around the axis.

With this configuration, the first tongue-section barrel center, the body-section barrel center, and the second tongue-section barrel center extend in a spiral shape, and thus the first tongue-section barrel center, the body-section barrel center, and the second tongue-section barrel center can be formed readily. Furthermore, the barrel center is inclined from the circumferential direction of the body section over the entire circumference of the piston ring, and thus, during operation of the engine, a component force is applied to the piston ring over the entire circumference so as to rotate the piston ring about an axis. Thus, the piston ring rotates relative to the inner peripheral surface of the cylinder more easily, which prevents an increase in a contact surface pressure at a certain location, and thereby uneven wear of the piston ring and the inner peripheral surface of the cylinder is suppressed.

In some embodiments, the first-tongue-section barrel center and the second-tongue-section barrel center each extend in the circumferential direction. The body-section barrel center comprises a middle portion extending in the circumferential direction and inclined portions each of which extends between the middle portion and corresponding one of the first-tongue-section barrel center and the second-tongue-section barrel center.

With this configuration, the body-section barrel center includes the inclined portions inclined from the circumferential direction, and thus, during operation of the engine, slide friction between the inclined portions and the inner peripheral surface of the cylinder generates a component force applied to the piston ring so as to rotate the piston ring about an axis. Thus, the piston ring rotates relative to the cylinder inner peripheral surface more easily, which prevents an increase in a contact surface pressure at a certain location, and thereby uneven wear of the piston ring and the inner peripheral surface of the cylinder is suppressed.

In some embodiments, each of a region on the one side and a region on the other side of an outer peripheral surface of the body section with respect to the axial direction is formed into a barrel shape bulging outward in the radial direction. A first body-section barrel center disposed outermost in the radial direction in the region on the other side is disposed continuously to a first-tongue-section barrel center disposed outermost in the radial direction on the outer peripheral surface of the first tongue section. A second body-section barrel center disposed outermost in the radial direction in the region on the one side is disposed continuously to a second-tongue-section barrel center disposed outermost in the radial direction on the outer peripheral surface of the second tongue section.

With this configuration, the regions on the one side and on the other side with respect to the axial direction on the outer peripheral surface of the body section are each formed into a barrel shape, and two strips of barrel centers, the first body-section barrel center and the second body-section barrel center, are formed on the body section. The first tongue-section barrel center and the first body-section barrel center are joined to each other, and the second tongue-section barrel center and the second body-section barrel center are joined to each other, and thereby the first tongue-section barrel center, the second tongue-section barrel center, the first body-section barrel center, and the second body-section barrel center can be readily formed.

Further, the first tongue-section barrel center, the second tongue-section barrel center, the first body-section barrel center, and the second body-section barrel center form two barrel centers over the entire circumference of the piston ring, which ensures even better sealing performance.

Further, with two strips of barrel centers provided, a contact surface pressure between each barrel center and the inner peripheral surface of the cylinder is reduced, and inclination of the outer peripheral surface of the piston ring from the inner peripheral surface of the cylinder is prevented, which makes it possible to suppress uneven wear of the piston ring and the inner peripheral surface of the cylinder.

### Advantageous Effects

According to the present invention, provided is a piston ring of an engine of gas-tight type with improved durability and suppressed flow-through of combustion gas in the non-overlapping region of the first tongue section and the second tongue section.

### BRIEF DESCRIPTION OF DRAWINGS

FIG. 1 is a schematic cross-sectional view of an engine to which a piston ring according to the present invention is applied.
FIG. 2 is a perspective view of a schematic appearance of a piston ring according to the first embodiment of the present invention.
FIG. 3 is a perspective enlarged view schematically showing region A in FIG. 2.
FIG. 4A is a diagram showing A-A cross section of FIG. 3 with an inner peripheral surface of a cylinder, and FIG. 4B is a diagram showing B-B cross section of FIG. 3 with an inner peripheral surface of a cylinder.
FIG. 5 is a schematic exploded diagram of an outer peripheral surface of the piston ring according to the first embodiment of the present invention.
FIG. 6 is a schematic exploded diagram of an outer peripheral surface of the piston ring according to the second embodiment of the present invention.
FIG. 7 is a diagram of the piston ring according to the second embodiment of the present invention, corresponding to FIG. 4A.
FIG. 8 is a schematic exploded diagram of an outer peripheral surface of a piston ring according to the third embodiment of the present invention.
FIGs. 9A and 9B are diagrams of the piston ring of an engine according to the third embodiment of the present invention, respectively corresponding to FIGs. 4A and 4B.

### DETAILED DESCRIPTION

Embodiments of the present invention will now be described in detail.

It is intended, however, that unless particularly specified, dimensions, materials, shapes, relative positions and the like of components described in the embodiments shall be interpreted as illustrative only and not intended to limit the scope of the present invention.

### (First embodiment)

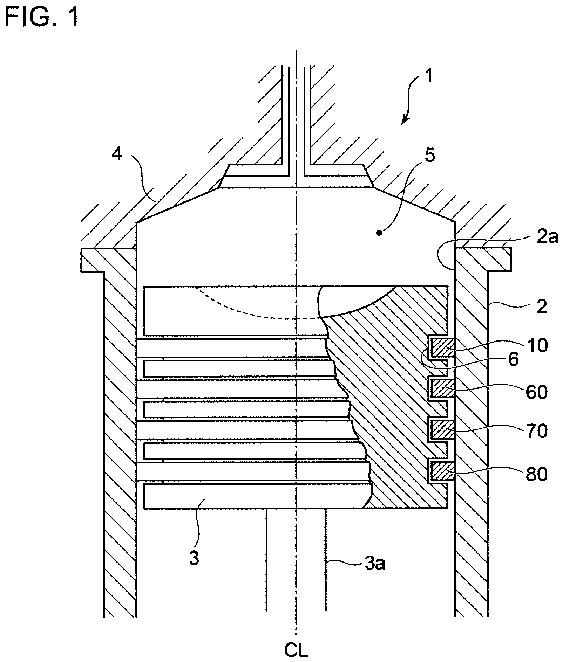

FIG. 1 is a schematic cross-sectional view of an engine 1 to which a piston ring 10 according to the first embodiment of the present invention is applied. The engine 1 is, for instance, a two-cycle large diesel engine for a ship, or the like.

The engine 1 includes a cylinder 2, a piston 3 disposed reciprocably in the cylinder 2, and a cylinder head 4 covering one end of the cylinder 2. A combustion chamber 5 is defined by the cylinder 2, the piston 3, and the cylinder head 4, on the one end side of the cylinder 2.

The engine 1 has a cross-head structure, for instance, with a piston rod 3a extending from the opposite side of the piston 3 from the combustion chamber 5, the piston rod 3a penetrating through the other end side of the cylinder 2. The opposite end of the piston rod 3a from the piston 3 is, though not illustrated, coupled to a crank shaft inside a crank chamber, via a cross head and a connection rod. If the engine 1 is of uniflow-scavenging type, for instance, an exhaust port is disposed on the cylinder head 4, and a scavenging port (not depicted) is disposed on the other end side of the cylinder 2.

The piston ring 10 is mounted to an outer peripheral part of the piston 3. Specifically, a piston-ring groove 6 is formed on the outer peripheral part of the piston 3, and the piston ring 10 is fitted into the piston ring 10. The piston ring 10 is disposed coaxially with the cylinder 2 and the piston 3, and an axis CL of the piston ring 10 coincides with the axis of the cylinder 2 and the piston 3.

The piston ring 10 protrudes outward from the outer peripheral surface of the piston 3 in the radial direction of the piston 3, and has an outer peripheral surface which is in slide contact with an inner peripheral surface 2a of the cylinder 2 (cylinder inner peripheral surface). Accordingly, a gap between the cylinder inner peripheral surface 2a and the outer peripheral surface of the piston 3 is closed by the piston ring 10, and a pressure in the combustion chamber 5 can be maintained with the piston ring 10.

In the present embodiment, besides the piston ring 10, three piston rings 60, 70, 80 are mounted to the piston 3 at an interval in a direction along the axis CL (hereinafter, also referred to as the axial direction). The piston ring 10 is disposed closest to the combustion chamber 5 in the axial direction. The number of piston rings is not limited to four, and may be three, for instance.

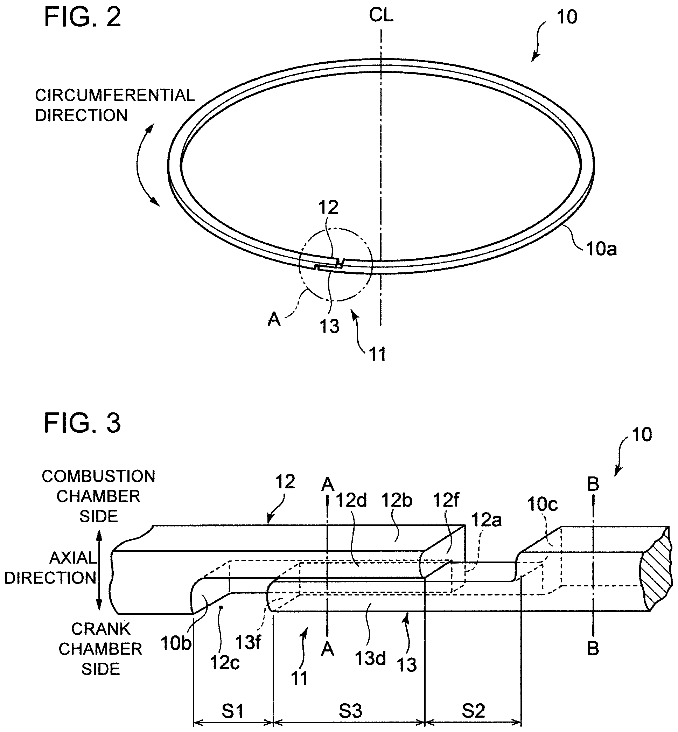

FIG. 2 is a schematic perspective view of the piston ring 10. As depicted in FIG. 2, the piston ring 10 includes a body section 10a, as well as the first tongue section 12 and the second tongue section 13 that form an end gap section 11.

The body section 10a extends along the circumferential direction around the axis CL (hereinafter, also referred to as just the circumferential direction).

FIG. 3 is a perspective enlarged view schematically showing region A in FIG. 2.

As depicted in FIG. 3, the first tongue section 12 extends from an end of the body section 10a in the circumferential direction. The first tongue section 12 includes an inner peripheral portion 12a forming an inner peripheral side of the piston ring 10, and a contacting portion 12b that protrudes outward in the radial direction of the body section 10a from the combustion-chamber 5 side of the inner peripheral portion 12a with respect to the axial direction. The inner peripheral portion 12a and the contacting portion 12b have an L-shape in a cross section taken along a direction orthogonal to the circumferential direction, and form an engagement groove 12c that extends in the circumferential direction. The engagement groove 12c is disposed outside in the radial direction of the body section 10a, and on the side of the cross head (crank chamber) with respect to the axial direction.

The second tongue section 13 extends from the other end of the body section 10a in the circumferential direction. The second tongue section 13 has a rectangular shape in a cross section orthogonal to the circumferential direction, and the second tongue section 13 has two side surfaces, one facing a radially-outer surface of the inner peripheral portion 12a and the other one facing a surface on the crank-chamber side of the contacting portion 12b with respect to the axial direction. In a state where the piston ring 10 is mounted to the piston 3, the second tongue section 13 engages with the engagement groove 12c, whereby the first tongue section 12 and the second tongue section 13 form the end gap section 11 of gas-tight type. At the end gap section 11, the side surface 12d of the first tongue section 12 and the side surface 13d of the second tongue section 13 form the outer peripheral surface of the piston ring 10.

The side surface 12d of the first tongue section 12 is disposed radially outside the body section 10a and faces outward in the radial direction. The side surface 12d extends along the circumferential direction, and with the piston ring 10 mounted to the piston 3, the side surface 12d faces the cylinder inner peripheral surface 2a. Hereinafter, the side surface 12d of the first tongue section 12 will be also referred to as the outer peripheral surface 12d. Further, the outer peripheral surface 12d of the first tongue section 12 is a side surface of the contacting portion 12b.

Similarly, the side surface 13d of the second tongue section 13 is disposed radially outside the body section 10a and faces outward in the radial direction. The side surface 13d extends along the circumferential direction, and with the piston ring 10 mounted to the piston 3, the side surface 13d faces the cylinder inner peripheral surface 2a. Hereinafter, the side surface 13d of the second tongue section 13 will be also referred to as the outer peripheral surface 13d.

With the second tongue section 13 engaging with the engagement groove 12c of the first tongue section 12, the end surface 10b on one end side of the body section 10a faces a distal end surface 13f of the second tongue section 13 via a gap, and a distal end surface 12f of the first tongue section 12 faces an end surface 10c on the other end side of the body section 10a via a gap. With these gaps, it is possible to absorb possible extension of the piston ring 10 in the circumferential direction in case of thermal expansion of the piston ring 10 caused by heat of combustion gas.

With such a gap provided between the end surface 10b of the body section 10a and the distal end surface 13f of the second tongue section 13, the end gap section 11 has a non-overlapping region S1 in the vicinity of the root of the first tongue section 12, where the first tongue section 12 and the second tongue section 13 do not overlap with each other in the axial direction. Similarly, with such a gap provided between the end surface 10c of the body section 10a and the distal end surface 12f of the first tongue section 12, the end gap section 11 has a non-overlapping region S2 in the vicinity of the root of the second tongue section 13, where the first tongue section 12 and the second tongue section 13 do not overlap with each other in the axial direction. Meanwhile, the end gap section 11 has an overlapping region S3 where the first tongue section 12 and the second tongue section 13 overlap in the axial direction, between the two non-overlapping regions S1, S2.

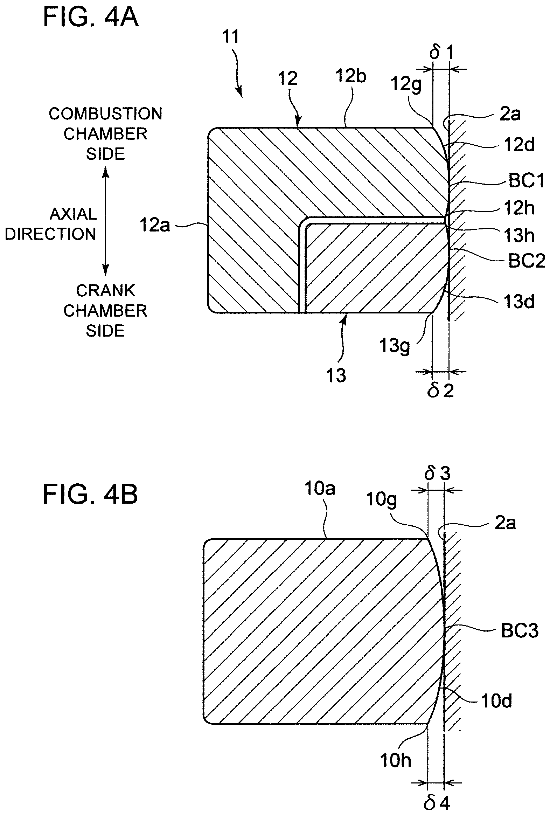

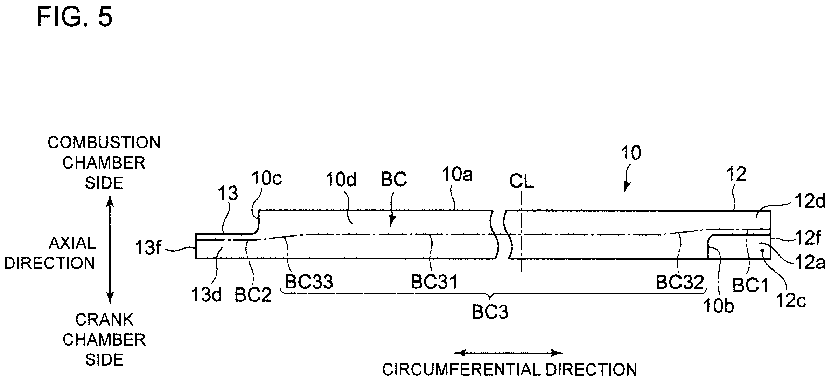

FIG. 4A is a diagram showing A-A cross section of FIG. 3 with the cylinder inner peripheral surface 2a. FIG. 4B is a diagram showing B-B cross section of FIG. 3 with the cylinder inner peripheral surface 2a. FIG. 5 is a schematic perspective view of an exploded outer peripheral surface of the piston ring 10.

As depicted in FIGs. 4A and 4B, the outer peripheral surface 12d of the first tongue section 12, the outer peripheral surface 13d of the second tongue section 13, and the outer peripheral surface 10d of the body section 10a of the piston ring 10 are each formed into a barrel shape bulging outward in the radial direction. Thus, a first tongue-section barrel center BC1, which is disposed outermost in the radial direction, is formed on the outer peripheral surface 12d of the first tongue section 12, in the middle with respect to the axial direction. A second tongue-section barrel center BC2, which is disposed outermost in the radial direction, is formed on the outer peripheral surface 13d of the second tongue section 13, in the middle with respect to the axial direction. A body-section barrel center BC3, which is disposed outermost in the radial direction, is formed on the outer peripheral surface 10d of the body section 10a, in the middle with respect to the axial direction.

As depicted in FIG. 5, the first tongue-section barrel center BC1 and the second tongue-section barrel center BC2 each extend along the circumferential direction. On the other hand, the body-section barrel center BC3 includes a middle portion BC31, an inclined portion BC32 on the side of the first tongue section 12, and an inclined portion BC33 on the side of the second tongue section 13. The middle portion BC31 extends along the circumferential direction. The inclined portion BC32 extends inclined from the circumferential direction, between the first tongue-section barrel center BC1 and the middle portion BC31. The inclined portion BC33 extends inclined from the circumferential direction, between the second tongue-section barrel center BC2 and the middle portion BC31.

Accordingly, the first tongue-section barrel center BC1, the body-section barrel center BC3, and the second tongue-section barrel center BC2 extend continuously, thereby forming one barrel center BC extending over the entire circumference on the outer peripheral surface of the piston ring 10.

With the above described configuration, the outer peripheral surface 12d of the first tongue section 12 and the outer peripheral surface 13d of the second tongue section 13 are each formed into a barrel shape, and thus the first tongue-section barrel center BC1 and the second tongue-section barrel center BC2 are respectively disposed on the outer peripheral surface 12d of the first tongue section 12 and the outer peripheral surface 13d of the second tongue section.

Thus, in the overlapping region S3 (see FIG. 3), where the first tongue section 12 and the second tongue section 13 overlap with each other in the axial direction, two strips of barrel centers, the first tongue-section barrel center BC1 and the second tongue-section barrel center BC2, are disposed at an interval with respect to the axial direction, and thereby high sealing performance is ensured.

Further, the non-overlapping regions S1, S2, where the first tongue section 12 and the second tongue section 13 do not overlap with each other in the axial direction, also include the first tongue-section barrel center BC1 and the second tongue-section barrel center BC2. Accordingly, sealing performance is ensured by each of the first tongue-section barrel center BC1 and the second tongue-section barrel center BC2 in the two non-overlapping regions S1, S2, and flow-through of combustion gas from the side of the combustion chamber 5 toward the side of the crank chamber is suppressed in the non-overlapping regions S1, S2 (see FIG.3). As a result, durability of the piston ring 10 improves, and durability of the engine 1 including the piston ring 10 improves as well.

Further, with the above configuration, the first tongue-section barrel center BC1, the body-section barrel center BC3, and the second tongue-section barrel center BC2 extend continuously, and thus the first tongue-section barrel center BC1 and the body-section barrel center BC3 are seamless, and the second tongue-section barrel center BC2 and the body-section barrel center BC3 are seamless, thereby ensuring good sealing performance.

Furthermore, with the above configuration, the body-section barrel center BC3 includes the inclined portions BC32, BC33 inclined from the circumferential direction, and thus, during operation of the engine 1, slide friction between the inclined portions BC32, BC33 and the cylinder inner peripheral surface 2a generates a component force applied to the piston ring 10 so as to rotate the piston ring 10 in the circumferential direction. Thus, the piston ring 10 rotates relative to the cylinder inner peripheral surface 2a more easily, which prevents an increase in a contact surface pressure at a certain location, and thereby uneven wear of the piston ring 10 and the cylinder inner peripheral surface 2a is suppressed.

Further, in the present embodiment, as a preferable aspect, as depicted in FIG. 4A, the first tongue-section barrel center BC1 is disposed offset toward the second tongue section 13 from the center with respect to the axial direction (center in a thickness direction) of the outer peripheral surface 12d of the first tongue section 12, on the outer peripheral surface 12d of the first tongue section 12, which is a side surface of the contacting portion 12b. Further, the second tongue-section barrel center BC2 is disposed offset toward the first tongue section 12 from the center with respect to the axial direction (center in the thickness direction) of the outer peripheral surface 13d of the second tongue section 13, on the outer peripheral surface 13d of the second tongue section 13.

With this configuration, since the first tongue-section barrel center BC1 is disposed offset toward the second tongue section 13 from the center of the first tongue section 12 with respect to the axial direction, it is possible to provide a larger gap in the radial direction between the outer peripheral surface 12d of the first tongue section 12 and the cylinder inner peripheral surface 2a, on the side of the combustion chamber 5 with respect to the axial direction. Specifically, it is possible to make a radial gap δ1 between the cylinder inner peripheral surface 2a and an edge portion 12g of the first tongue section 12 disposed on the side of the combustion chamber 5 in the axial direction relatively larger than a radial gap between the cylinder inner peripheral surface 2a and an edge portion 12h of the first tongue section 12 disposed on the side of the crank chamber in the axial direction.

Similarly, since the second tongue-section barrel center BC2 is disposed offset toward the first tongue section 12 from the center of the second tongue section 13 with respect to the axial direction, it is possible to provide a larger gap in the radial direction between the outer peripheral surface 13d of the second tongue section 13 and the cylinder inner peripheral surface 2a, on the side of the crank chamber with respect to the axial direction. Specifically, it is possible to make a radial gap δ2 between the cylinder inner peripheral surface 2a and an edge portion 13g of the second tongue section 13 disposed on the side of the crank chamber in the axial direction relatively larger than a radial gap between the cylinder inner peripheral surface 2a and an edge portion 13h of the second tongue section 13 disposed on the side of the combustion chamber 5 in the axial direction.

The piston ring 10 is engaged with the piston-ring groove 6 with a gap (backlash) in the axial direction, and thus, while the piston 3 is moving toward the top dead center during operation of the engine 1, the piston ring 10 deforms so that the radially outer side is behind the radially inner side due to slide friction. Even if such deformation causes the outer peripheral surface 12d of the first tongue section 12 to be inclined from the cylinder inner peripheral surface 2a, the radial gap δ1 prevents uneven contact of the edge portion 12g of the first tongue section 12 with the cylinder inner peripheral surface 2a, according to the above configuration.

Similarly, while the piston 3 is moving toward the bottom dead center during operation of the engine 1, the piston ring 10 deforms so that the radially outer side is behind the radially inner side due to slide friction. Even if such deformation causes the outer peripheral surface 13d of the second tongue section 13 to be inclined from the cylinder inner peripheral surface 2a, the radial gap δ2 prevents uneven contact of the edge portion 13g of the second tongue section 13 with the cylinder inner peripheral surface 2a, according to the above configuration.

As a result of prevention of uneven contact by the edge portion 12g of the first tongue section 12 and the edge portion 13g of the second tongue section 13, uneven wear of the piston ring 10 and the cylinder inner peripheral surface 2a is suppressed, and durability of the piston ring 10 improves even further.

On the other hand, in the present embodiment, as depicted in FIG. 4B as a preferable aspect, the middle portion BC31 is disposed in the middle with respect to the axial direction (center in the thickness direction) of the outer peripheral surface 10d of the body section 10a, on the outer peripheral surface 10d of the body section 10a. With the middle portion BC31 disposed in the center, it is possible to provide a larger gap in the radial direction between the cylinder inner peripheral surface 2a and the outer peripheral surface 10d of the body section 10a, on either side with respect to the axial direction. Specifically, it is possible to enlarge a radial gap δ3 between the cylinder inner peripheral surface 2a and an edge portion 10g of the body section 10a disposed on the side of the combustion chamber 5 in the axial direction, as well as a radial gap δ4 between the cylinder inner peripheral surface 2a and an edge portion 10h of the body section 10a disposed on the side of the crank chamber in the axial direction.

Thus, even if the outer peripheral surface 10d of the body section 10a is inclined from the cylinder inner peripheral surface 2a due to reciprocal motion of the piston 3, it is possible to prevent uneven contact of the edge portions 10g, 10h. Also as a result of prevention of uneven contact by the edge portions 10g, 10h, uneven wear of the piston ring 10 and the cylinder inner peripheral surface 2a is suppressed, and durability of the piston ring 10 improves even further.

### (Second embodiment)

A piston ring 20 of an engine according to the second embodiment of the present invention will now be described. In the description of the following embodiment, the same or similar feature in the embodiment previously described is associated with the same name or reference numeral and described briefly or not described.

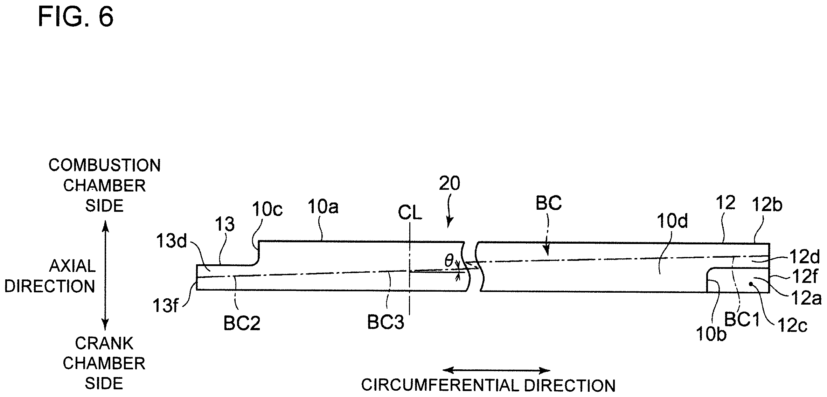

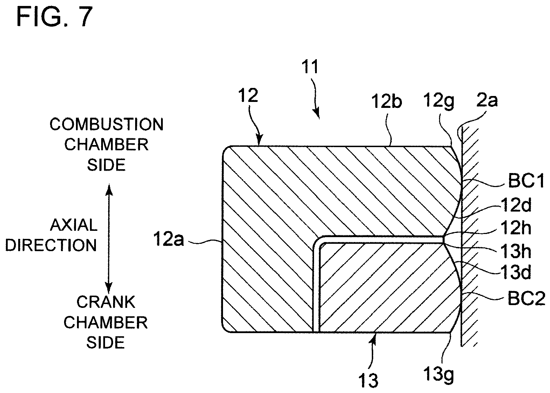

FIG. 6 is a schematic perspective view of an exploded outer peripheral surface of the piston ring 20. FIG. 7 is a diagram of the piston ring 20, corresponding to FIG. 4A.

As depicted in FIGs. 6 and 7, the piston ring 20 is different from the piston ring 10 according to the first embodiment, in that the first tongue-section barrel center BC1, the body-section barrel center BC3, and the second tongue-section barrel center BC2 extend continuously in a spiral shape around the axis CL. In an exploded view in FIG. 6, the first tongue-section barrel center BC1, the body-section barrel center BC3, and the second tongue-section barrel center BC2 form a barrel center BC that extends linearly, and are each inclined from the circumferential direction at a predetermined inclination angle θ.

With the above configuration, the barrel center BC is inclined from the circumferential direction over the entire circumference of the piston ring 20, and thus, during operation of the engine 1, a component force is applied to the piston ring 20 over the entire circumference so as to rotate the piston ring 20 in the circumferential direction. Thus, the piston ring 20 rotates relative to the cylinder inner peripheral surface 2a more easily, which prevents an increase in a contact surface pressure at a certain location, and thereby uneven wear of the piston ring 20 and the cylinder inner peripheral surface 2a is suppressed.

Further, with this configuration, the first tongue-section barrel center BC1, the body-section barrel center BC3, and the second tongue-section barrel center BC2 extend in a spiral shape, and thus the first tongue-section barrel center BC1, the body-section barrel center BC3, and the second tongue-section barrel center BC2 can be formed readily.

### (Third embodiment)

A piston ring 30 of an engine according to the third embodiment of the present invention will now be described.

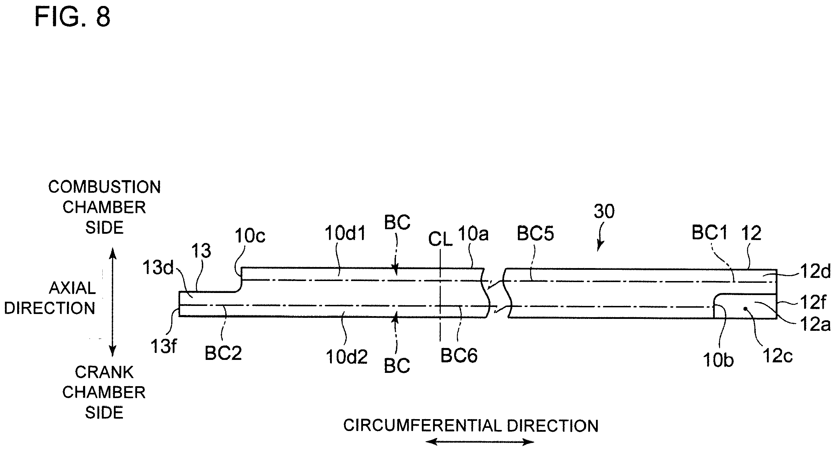

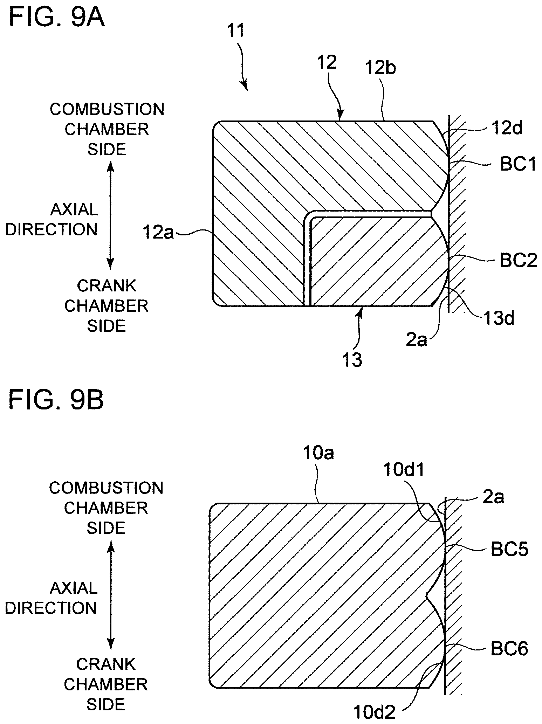

FIG. 8 is a schematic perspective view of an exploded outer peripheral surface of the piston ring 30. FIGs. 9A and 9B are diagrams of the piston ring 30, respectively corresponding to FIGs. 4A and 4B.

As depicted in FIGs. 8, 9A and 9B, the piston ring 30 is different from the piston ring 10 of the first embodiment in that a region 10d1 on the side of the combustion chamber 5 and a region 10d2 on the side of the crank chamber in the axial direction are formed in a barrel shape bulging outward in the radial direction, on the outer peripheral surface 10d of the body section 10a, and in that the first body-section barrel center BC5 disposed outermost in the radial direction in the region 10d1 is disposed continuously to the first tongue-section barrel center BC1, and the second body-section barrel center BC6 disposed outermost in the radial direction in the region 10d2 is disposed continuously to the second tongue-section barrel center BC2.

With this configuration, two strips of barrel centers, the first body-section barrel center BC5 and the second body-section barrel center BC6, are formed on the body section 10a, with the first tongue-section barrel center BC1 and the first body-section barrel center BC5 joining to each other, and the second tongue-section barrel center BC2 and the second body-section barrel center BC6 joining to each other, and thereby the first tongue-section barrel center BC1, the second tongue-section barrel center BC2, the first body-section barrel center BC5, and the second body-section barrel center BC6 can be readily formed.

Further, the first tongue-section barrel center BC1 and the first body-section barrel center BC5 form one barrel center BC, and the second tongue-section barrel center BC2 and the second body-section barrel center BC6 form one barrel center BC, so that two strips of barrel centers BC are disposed over the entire circumference of the piston ring 30, which ensures even better sealing performance.

Further, with two strips of barrel centers BC disposed, a contact surface pressure between each barrel center BC and the cylinder inner peripheral surface 2a is reduced, and inclination of the outer peripheral surface of the piston ring 30 from the cylinder inner peripheral surface 2a is prevented, which makes it possible to suppress uneven wear of the piston ring 30 and the cylinder inner peripheral surface 2a.

The present invention is not limited to the above described first to third embodiments, and various amendments and modifications, as well as combination, of the above embodiments may be implemented.

For instance, in the first to third embodiments, the outer peripheral surface of the body section 10a may not be formed in a barrel shape, and but in a flat shape in a cross section orthogonal to the circumferential direction. In other words, it is sufficient if at least the outer peripheral surface 12d of the first tongue section 12 and the outer peripheral surface 13d of the second tongue section 13 are each formed in a barrel shape.

Further, in the first embodiment, the position of the middle portion BC31 in the axial direction may coincide with the first tongue-section barrel center BC1 or the second tongue-section barrel center BC2, without providing the inclined portion BC32 or the inclined portion BC33.

Further, in the third embodiment, one of the first body-section barrel center BC5 or the second body-section barrel center BC6 may not be necessarily provided.

Finally, it will be understood that the piston ring of the engine according to the present invention is suitable for a two-cycle large diesel engine for a ship but may also be applied to another type of engine.

### Description of Reference Numeral

- 1: Engine
- 2: Cylinder
- 2a: Cylinder inner peripheral surface
- 3: Piston
- 3a: Piston rod
- 4: Cylinder head
- 5: Combustion chamber
- 6: Piston-ring groove
- 10, 20, 30: Piston ring
- 10a: Body section
- 10b: End surface
- 10c: End surface
- 10d: Outer peripheral surface
- 11: End gap section
- 12: First tongue section
- 12a: Inner peripheral portion
- 12b: Contacting portion
- 12c: Engagement groove
- 12d: Outer peripheral surface
- 12f: Distal end surface
- 12g, 12h: Edge portion
- 13: Second tongue section
- 13d: Outer peripheral surface
- 13f: Distal end surface
- 13g, 13h: Edge portion
- BC: Barrel center
- BC1: First tongue-section barrel center
- BC2: Second tongue-section barrel center
- BC3: Body-section barrel center
- BC31: Middle portion
- BC32, BC33: Inclined portion
- BC5: First body-section barrel center
- BC6: Second body-section barrel center
- S1, S2: Non-overlapping region
- S3: Overlapping region
- δ1, δ2, δ3, δ4: Gap

## Claims

1. A piston ring (10;20;30), comprising:
a body section (10a) extending along a circumferential direction around an axis (CL);
a first tongue section (12) extending from a first end toward a second end of the body section (10a) and having an engagement groove (12c) formed to extend along the circumferential direction on an outer side of the body section (10a) with respect to a radial direction and on one side with respect to an axial direction; and
a second tongue section (13) extending from the second end toward the first end of the body section (10a) and configured to engage with the engagement groove (12c) to form an end gap section (11) with the first tongue section (12), **characterised in that** an outer peripheral surface (12d,13d) of each of the first tongue section (12) and the second tongue section (13) is formed into a barrel shape which bulges outward in the radial direction,
wherein a first-tongue-section barrel center (BC1) disposed outermost in the radial direction is formed on the outer peripheral surface (12d) of the first tongue section (12), and
wherein a second-tongue-section barrel center (BC2) disposed outermost in the radial direction is formed on the outer peripheral surface (13d) of the second tongue section (13) .

2. A piston ring (10;20) according to claim 1,
wherein the body section (10a) has an outer peripheral surface (10d) formed into a barrel shape which bulges outward in the radial direction,
wherein a body-section barrel center (BC3) disposed outermost in the radial direction is formed on the outer peripheral surface (10d) of the body section (10a), and
wherein the first-tongue-section barrel center (BC1), the body-section barrel center (BC3), and the second-tongue-section barrel center (BC2) extend continuously.

3. The piston ring (20) according to claim 2,
wherein the first-tongue-section barrel center (BC1), the body-section barrel center (BC3), and the second-tongue-section barrel center (BC2) extend in a spiral shape around the axis (CL).

4. The piston ring (10) according to claim 2,
wherein the first-tongue-section barrel center (BC1) and the second-tongue-section barrel center (BC2) each extend in the circumferential direction, and
wherein the body-section barrel center (BC3) comprises a middle portion (BC31) extending in the circumferential direction and inclined portions (BC32,BC33) each of which extends between the middle portion (BC31) and corresponding one of the first-tongue-section barrel center (BC1) and the second-tongue-section barrel center (BC2).

5. The piston ring (10) according to claim 2,
wherein a middle portion (BC31) of the body-section barrel center (BC3) is formed in center, with respect to the axial direction, of the outer peripheral surface (10d) of the body section (10a).

6. The piston ring (10) according to claim 1 or 2,
wherein the first-tongue-section barrel center (BC1) is formed in a center with respect to the axial direction, and
wherein the second-tongue-section barrel center (BC2) is formed in a center with respect to the axial direction.

7. The piston ring (10) according to claim 1 or 2,
wherein the first-tongue-section barrel center (BC1) is formed offset toward the second tongue section (13) from a center, with respect to the axial direction, of the outer peripheral surface (12d) of the first tongue section (12).

8. The piston ring (10) according to claim 1, 2 or 7,
wherein the second-tongue-section barrel center (BC2) is formed offset toward the first tongue section (12) from a center, with respect to the axial direction, of the outer peripheral surface (13d) of the second tongue section (13).

9. The piston ring (10) according to claim 1 or 2,
wherein the first-tongue-section barrel center (BC1) and the second-tongue-section barrel center (BC2) are formed at an interval in the axial direction within a region in which the first tongue section (12) and the second tongue section (13) overlap with each other.

10. The piston ring (10) according to claim 1 or 2,
wherein one of the first-tongue-section barrel center (BC1) or the second-tongue-section barrel center (BC2) is formed within a region in which the first tongue section (12) and the second tongue section (13) do not overlap with each other.

11. A piston ring (30) according to claim 1,
wherein each of a region on the one side (10d2) and a region on the other side (10d1) of an outer peripheral surface (10d) of the body section (10a) with respect to the axial direction is formed into a barrel shape bulging outward in the radial direction,
wherein a first body-section barrel center (BC5) disposed outermost in the radial direction within the region on the other side (10d1) is disposed continuously to the first-tongue-section barrel center (BC1), and
wherein a second body-section barrel center (BC6) disposed outermost in the radial direction within the region on the one side (10d2) is disposed continuously to the second-tongue-section barrel center (BC2).

## Patentansprüche

1. Ein Kolbenring (10;20;30), umfassend:
einen Körperabschnitt (10a), der sich entlang einer Umfangsrichtung um eine Achse (CL) erstreckt,
einen ersten Zungenabschnitt (12), der sich von einem ersten Ende zu einem zweiten Ende des Körperabschnitts (10a) erstreckt und der eine Eingriffsnut (12c), die sich entlang der Umfangrichtung auf einer Außenseite des Körperabschnitts (10a) hinsichtlich einer Radialrichtung und auf einer Seite hinsichtlich einer Axialrichtung erstreckt, aufweist, und
einen zweiten Zungenabschnitt (13), der sich von dem zweiten Ende zu dem ersten Ende des Körperabschnitts (10a) erstreckt und der ausgestaltet ist, um mit der Eingriffsnut (12c) in Eingriff zu gelangen, um mit dem ersten Zungenabschnitt (12) einen Endlückenabschnitt (11) auszubilden,
**dadurch gekennzeichnet, dass**
eine Außenumfangsoberfläche (12d, 13d) sowohl von dem ersten Zungenabschnitt (12) als auch von dem zweiten Zungenabschnitt (13) in einer Fassform ausgebildet ist, welche in der Radialrichtung nach außen ausbaucht,
wobei eine erste Zungenabschnitt-Fassmitte (BC1), die am weitesten außen in der Radialrichtung angeordnet ist, an der Außenumfangsoberfläche (12d) des ersten Zungenabschnitts (12) ausgebildet ist, und
wobei eine zweite Zungenabschnitt-Fassmitte (BC2), die am weitesten außen in der Radialrichtung angeordnet ist, an der Außenumfangsoberfläche (13d) des zweiten Zungenabschnitts (13) ausgebildet ist.

2. Ein Kolbenring (10;20) gemäß Anspruch 1,
wobei der Körperabschnitt (10a) eine Außenumfangsoberfläche (10d), die in einer Fassform, welche sich in die Radialrichtung nach außen ausbaucht, ausgebildet ist, aufweist,
wobei eine Körperabschnitt-Fassmitte (BC3), die am weitesten außen in der Radialrichtung angeordnet ist, an der Außenumfangsoberfläche (10d) des Körperabschnitts (10a) ausgebildet ist, und
wobei sich die erste Zungenabschnitt-Fassmitte (BC1), die Körperabschnitt-Fassmitte (BC3) und die zweite Zungenabschnitt-Fassmitte (BC2) kontinuierlich erstrecken.

3. Der Kolbenring (20) gemäß Anspruch 2,
wobei sich die erste Zungenabschnitt-Fassmitte (BC1), die Körperabschnitt-Fassmitte (BC4) und die zweite Zungenabschnitt-Fassmitte (BC2) in einer Spiralform um die Achse (CL) herum erstrecken.

4. Der Kolbenring (10) gemäß Anspruch 2,
wobei sich die erste Zungenabschnitt-Fassmitte (BC1) und die zweite Zungenabschnitt-Fassmitte (BC2) jeweils in der Umfangsrichtung erstrecken, und
wobei die Körperabschnitt-Fassmitte (BC3) einen Mittelabschnitt (BC31), der sich in der Umfangsrichtung erstreckt, und geneigte Abschnitte (BC32,BC33), die sich jeweils zwischen dem Mittelabschnitt (BC31) und einer entsprechenden von der ersten Zungenabschnitt-Fassmitte (BC1) und der zweiten Zungenabschnitt-Fassmitte (BC2) erstrecken, umfasst.

5. Der Kolbenring (10) gemäß Anspruch 2,
wobei ein Mittelabschnitt (BC31) der Körperabschnitt-Fassmitte (BC3) in einer Mitte, hinsichtlich der Axialrichtung, der Außenumfangsoberfläche (10d) des Körperabschnitts (10a) ausgebildet ist.

6. Der Kolbenring (10) gemäß Anspruch 1 oder 2,
wobei die erste Zungenabschnitt-Fassmitte (BC1) an einer Mitte hinsichtlich der Axialrichtung ausgebildet ist, und
wobei die zweite Zungenabschnitt-Fassmitte (BC2) an einer Mitte hinsichtlich der Axialrichtung ausgebildet ist.

7. Der Kolbenring (10) gemäß Anspruch 1 oder 2,
wobei die erste Zungenabschnitt-Fassmitte (BC1) abgesetzt zu dem zweiten Zungenabschnitt (13) von einer Mitte, hinsichtlich der Axialrichtung, der Außenumfangsoberfläche (12d) des ersten Zungenabschnitts (12) ausgebildet ist.

8. Der Kolbenring (10) gemäß Anspruch 1, 2 oder 7,
wobei die zweite Zungenabschnitt-Fassmitte (BC2) abgesetzt zu dem ersten Zungenabschnitt (12) von einer Mitte, hinsichtlich der Axialrichtung, der Außenumfangsoberfläche (13d) des zweiten Zungenabschnitts (13) ausgebildet ist.

9. Der Kolbenring (10) gemäß Anspruch 1 oder 2,
wobei die erste Zungenabschnitt-Fassmitte (BC1) und die zweite Zungenabschnitt-Fassmitte (BC2) in einem Intervall in der Axialrichtung innerhalb eines Bereichs, in dem der erste Zungenabschnitt (12) und der zweite Zungenabschnitt (13) einander überlappen, ausgebildet sind.

10. Der Kolbenring (10) gemäß Anspruch 1 oder 2,
wobei die erste Zungenabschnitt-Fassmitte (BC1) oder die zweite Zungenabschnitt-Fassmitte (BC2) in einem Bereich, in dem der erste Zungenabschnitt (12) und der zweite Zungenabschnitt (13) einander nicht überlappen, ausgebildet ist.

11. Ein Kolbenring (30) gemäß Anspruch 1,
wobei sowohl ein Bereich auf der einen Seite (10d2) als auch ein Bereich auf der anderen Seite (10d1) einer Außenumfangsoberfläche (10d) des Körperabschnitts (10a) hinsichtlich der Axialrichtung in einer Fassform, die in die Radialrichtung nach außen ausbaucht, ausgebildet ist,
wobei eine erste Körperabschnitt-Fassmitte (BC5), die am weitesten außen in der Radialrichtung innerhalb des Bereichs auf der anderen Seite (10d1), angeordnet ist, kontinuierlich zu der ersten Zungenabschnitt-Fassmitte (BC1) angeordnet ist, und
wobei eine zweite Körperabschnitt-Fassmitte (BC6), die am weitesten außen in der Radialrichtung innerhalb des Bereichs auf der einen Seite (10d2) angeordnet ist, kontinuierlich zu der zweiten Zungenabschnitt-Fassmitte (BC2) angeordnet ist.

## Revendications

1. Segment (10; 20; 30) de piston, comprenant :
une partie (10a) de corps, s'étendant suivant une direction circonférentielle autour d'un axe (CL);
une première partie (12) de languette, s'étendant d'une première extrémité à une second extrémité de la partie (10a) de corps et ayant une rainure (12c) d'enclenchement, formée de manière à s'étendre suivant la direction circonférentielle d'un côté extérieur de la partie (10a) de corps par rapport à une direction radiale et d'un côté par rapport à une direction axiale et
une second partie (13) de languette, s'étendant de la seconde extrémité vers la première extrémité de la partie (10a) de corps et configurée pour s'enclencher dans la rainure (12c) d'enclenchement, pour former une partie (11a) d'intervalle d'extrémité avec la première partie (12) de languette,
**caractérisé en ce qu'**une surface (12d, 13d) périphérique extérieure de chacune de la première partie (12) de languette et de la seconde partie (13) de languette est conformée en une forme en fût, bombée vers l'extérieur dans la direction radiale,
dans lequel un centre (BC1) de fût de partie de première languette, disposé le plus à l'extérieur dans la direction radiale, est formé sur la surface (12d) périphérique extérieure de la première partie (12) de languette et
dans lequel un centre (BC2) de fût de partie de seconde languette, disposé le plus à l'extérieur dans la direction radiale, est formé sur la surface (13d) périphérique extérieure de la deuxième partie (13) de languette.

2. Segment (10; 20) de piston suivant la revendication 1,
dans lequel la partie (10a) de corps a une surface (10d) périphérique extérieure, conformée en une forme en fût, bombée vers l'extérieur dans la direction radiale,
dans lequel un centre (BC3) de fût de partie de corps, disposé le plus à l'extérieur dans la direction radiale, est formé sur la surface (10d) périphérique extérieure de la partie (10a) de corps et
dans lequel le centre (BC1) de fût de la première partie de languette, le centre (BC3) de fût de la partie de corps et le centre (BC2) de fût de la seconde partie de languette s'étendent en continu.

3. Segment (20) de piston suivant la revendication 2,
dans lequel le centre (BC1) de fût de la première partie de languette, le centre (BC3) de fût de la partie de corps et le centre (BC2) de fût de la seconde partie de languette s'étendent suivant une forme en spirale autour de l'axe (CL).

4. Segment (10) de piston suivant la revendication 2,
dans lequel le centre (BC1) de fût de la première partie de languette et le centre (BC2) de fût de la deuxième partie de languette s'étendent chacun dans la direction périphérique et
dans lequel le centre (BC3) fût de la partie périphérique comprend une partie (BC31) médiane, s'étendant dans la direction périphérique, et des parties (BC32, BC33) inclinées, chacune d'entre elles s'étendant entre la partie (BC31) médiane et un correspondant du centre (BC1) de fût de la première partie de languette et du centre (BC2) de fût de la deuxième partie de languette.

5. Segment (10) de piston suivant la revendication 2,
dans lequel une partie (BC31) médiane du centre (BC3) de fût de la partie de corps est formée au centre, par rapport à la direction axiale, de la surface (10d) périphérique extérieure de la partie (10a) de corps.

6. Segment (10) de piston suivant la revendication 1 ou 2,
dans lequel le centre (BC1) de fût de la première partie de languette est formé au centre par rapport à la direction axiale et
dans lequel le centre (BC2) de fût de la seconde partie de languette est formé au centre par rapport à la direction axiale.

7. Segment (10) de piston suivant la revendication 1 ou 2,
dans lequel le centre (BC1) de fût de la première partie de languette est formé de manière décalée vers la seconde partie (13) de languette, à partir d'un centre, par rapport à la direction axiale, de la surface (12d) périphérique extérieure de la première partie (12) de languette.

8. Segment (10) de piston suivant la revendication 1, 2 ou 7,
dans lequel le centre (BC2) de fût de la seconde partie de languette est formé de manière décalée vers la première partie (12) de languette à partir d'un centre, par rapport à la direction axiale, de la surface (13d) périphérique extérieure de la deuxième partie (13) de languette.

9. Segment (10) de piston suivant la revendication 1 ou 2,
dans lequel le centre (BC1) de fût de la première partie de languette et le centre (BC2) de fût de la seconde partie de languette sont formés à un intervalle, dans la direction axiale, dans une région dans laquelle la première partie (12) de languette et la seconde partie (13) de languette se chevauchent.

10. Segment (10) de piston suivant la revendication 1 ou 2,
dans lequel l'un du centre (BC1) de fût de la première partie de languette ou du centre (BC2) de fût de la seconde partie de languette est formé dans une région dans laquelle la première partie (12) de languette et la seconde partie (13) de languette ne se chevauchent pas.

11. Segment (30) de piston suivant la revendication 1,
dans lequel chacune d'une région d'un côté (10d2) et d'une région de l'autre côté (10d1) d'une surface (10d) périphérique extérieure de la partie (10a) de corps, par rapport à la direction axiale, est conformée en une forme en fût, bombée vers l'extérieur dans la direction radiale,
dans lequel un centre (BC5) de fût d'une première partie de corps, disposée le plus à l'extérieur dans la direction axiale dans la région de l'autre côté (10d1), est disposé d'une manière continue vers le centre (BC1) de fût de la première partie de languette et
dans lequel un centre (BC6) de fût d'une seconde partie de corps, disposée le plus à l'extérieur dans la direction radiale dans la région du un côté (10d2), est disposé d'une manière continue vers le centre (BC2) de fût de la seconde partie de languette.
